# EUROPÄISCHE PATENTSCHRIFT

(11) **EP 4 498 141 B1**
(45) Veröffentlichungstag und Bekanntmachung des Hinweises auf die Patenterteilung: **26.11.2025**
(21) Anmeldenummer: 23188313.3
(22) Anmeldetag: 28.07.2023
(51) Int. Cl.: G02B 6/44

(54) **SCHIENENANORDNUNG, TRÄGERANORDNUNG UND FASEROPTISCHES VERTEILERSYSTEM**
RAIL ASSEMBLY, BEAM ASSEMBLY AND FIBER OPTIC DISTRIBUTION SYSTEM
ENSEMBLE DE RAILS, ENSEMBLE DE SUPPORT ET SYSTÈME DE DISTRIBUTION DE FIBRES OPTIQUES

(43) Veröffentlichungstag der Anmeldung: 29.01.2025
(73) Patentinhaber: Rosenberger-OSI GmbH & Co. OHG, 86167 Augsburg (DE)
(72) Erfinder: Mayr, Harald, 86735 Amerdingen (DE); Jäger, Stephanie, 86391 Stadtbergen (DE); True, Thomas, 86356 Neusäß (DE); Simmerlein, Nina, 86169 Augsburg (DE); Heimer, Danny, 283714 Miesbach (DE); Brücher, Luis, 13465 Berlin (DE); Weigand, Benjamin, 86150 Augsburg (DE); Körner, Daniel, 39128 Magdeburg (DE); Morenz, Stephan, 04435 Schkeuditz (DE)
(74) Vertreter: Lorenz, Matthias

(56) Entgegenhaltungen:
- EP-B1- 2 995 981
- US-A1- 2012 106 911
- US-A1- 2022 260 799
- US-B2- 10 725 258
- US-B2- 8 433 171

## Beschreibung

Die Erfindung betrifft eine Schienenanordnung für die Aufnahme mehrerer Trägereinheiten für faseroptische Komponenten, insbesondere für Rangierfelder, aufweisend eine erste Montageschiene und eine separate zweite Montageschiene, gemäß dem Oberbegriff des Anspruchs 1.

Die Erfindung betrifft außerdem eine Trägeranordnung, aufweisend mehrere Trägereinheiten, insbesondere Rangierfelder, und eine Schienenanordnung für die Trägereinheiten.

Die Erfindung betrifft ferner ein faseroptisches Verteilersystem, aufweisend einen Verteilerrahmen und wenigstens eine Trägeranordnung.

In Rechenzentren werden mitunter Trägereinheiten, insbesondere einzelne Einschubfächer ("Trays") bis hin zu so genannten Rangierfeldern (auch "Patchfelder" oder "Patchpanels" genannt) zum Herstellen und Verteilen von Datenverbindungen, beispielsweise über Netzwerkkabel, Telefonkabel oder Glasfaserkabel, verwendet. Ein solches Rangierfeld umfasst in der Regel zumindest eine Schnittstelle ("Interface") mit einer bestimmten Anzahl einzelner oder in Kassetten gruppierter Anschlüsse bzw. Steckverbinder. In der Praxis sind häufig mehrere Rangierfelder in einem gemeinsamen Verteilerrahmen (auch "Rack" genannt) in verschiedenen Höhenlagen bzw. Höhenebenen installiert.

Aus Gründen der Zugänglichkeit der Schnittstellen des Rangierfeldes für den Servicetechniker sind die Rangierfelder bzw. Trays häufig aus dem Verteilerrahmen bedarfsweise ausziehbar und hierfür zusammen mit einem entsprechend ausgestalteten Trägergehäuse ("Chassis") in dem Verteilerrahmen befestigt, wie beispielsweise in der US 2022/0236510 A1 beschrieben. Das Trägergehäuse ist starr an dem Verteilerrahmen montiert und weist geeignete Linearauszüge für die Einschubfächer bzw. Trays auf. Um die Anschlussdichte weiter zu erhöhen, werden in der Regel mehrere Rangierfelder in einem gemeinsamen Trägergehäuse angeordnet.

Aus Gründen von Standardisierungsbestrebungen und einer möglichst hohen Modularität wird für derartige Trägergehäuse nur eine begrenzte Anzahl von Höhenvarianten bereitgestellt. Ferner lassen sich die Trägergehäuse nur in diskreter Beabstandung - als Vielfache einer so genannten "Höheneinheit" (HE) - in dem Verteilerrahmen montieren. Eine beliebige Höhenskalierbarkeit ist nicht möglich, weshalb Stauraum im Verteilerrahmen oftmals nicht optimal genutzt werden kann. Ferner ist die Konfigurationsvielfalt eingeschränkt und die in der Regel geschlossenen Trägergehäuse bieten auch nur einen eingeschränkten Zugang zu den Rangierfeldern von der Rückseite und von oben.

Vor dem Hintergrund, den Stauraum in einem Verteilerrahmen besser auszunutzen, bei gleichzeitig guter Zugänglichkeit für einen Servicetechniker, hat es sich als vorteilhaft herausgestellt, zur Aufnahme von faseroptischen Komponenten voneinander unabhängige Montageschienen in dem Verteilerrahmen gegenüberliegend anzuordnen, mit entsprechenden Auflageflächen für die einzelnen Trägereinheiten bzw. Rangierfelder. Ein derartiges System ist beispielsweise in der WO 2023/114256 A1 gezeigt.

In der Praxis hat sich allerdings gezeigt, dass die Herstellbarkeit einer solchen Schienenanordnung vergleichsweise aufwändig und daher kostenintensiv sein kann. Des Weiteren ist auch die mechanische Stabilität für die Halterung und Führung der Rangierfelder bei den bekannten Lösungen nicht für alle Anwendungsfälle ausreichend gegeben, insbesondere nicht über die vollständige Ein- und Auszugslänge der Rangierfelder entlang der Montageschienen. So kann es mitunter vorkommen, dass die Rangierfelder quer zur Auszugsrichtung verkippen.

Zum technischen Hintergrund wird außerdem noch auf die US 8 433 171 B2 verwiesen, die sich auf faseroptische Komponenten zum Verwalten und Verbinden von faseroptischen Kabeln, einschließlich faseroptischer Abschlussgeräte bezieht, die eine hohe Packungsdichte von faseroptischen Kabeln in einem faseroptischen Routingbereich bieten, der sich von den faseroptischen Abschlussgeräten aus erstreckt.

In Anbetracht des bekannten Stands der Technik besteht die Aufgabe der vorliegenden Erfindung darin, eine Schienenanordnung zur Aufnahme mehrerer Trägereinheiten für faseroptische Komponenten bereitzustellen, mit der der Stauraum in einem Verteilerrahmen gut ausnutzbar ist, bei vorzugsweise wirtschaftlicher Herstellbarkeit der einzelnen Montageschienen und hoher mechanischer Stabilität.

Der vorliegenden Erfindung liegt auch die Aufgabe zugrunde, eine verbesserte Trägeranordnung und ein verbessertes faseroptisches Verteilersystem bereitzustellen, mit hoher Anschlussdichte, vorzugsweise wirtschaftlicher Herstellbarkeit und hoher mechanischer Stabilität.

Die Aufgabe wird für die Schienenanordnung mit den in Anspruch 1 aufgeführten Merkmalen gelöst. Hinsichtlich der Trägeranordnung wird die Aufgabe durch die Merkmale des Anspruchs 13 und betreffend das faseroptische Verteilersystem durch Anspruch 15 gelöst.

Die abhängigen Ansprüche und die nachfolgend beschriebenen Merkmale betreffen vorteilhafte Ausführungsformen und Varianten der Erfindung.

Es ist eine Schienenanordnung für die Aufnahme mehrerer Trägereinheiten für faseroptische Komponenten vorgesehen, insbesondere für Rangierfelder, aufweisend eine erste Montageschiene und eine separate zweite Montageschiene. Die Montageschienen sind voneinander beabstandet und erstrecken sich jeweils einstückig bzw. monolithisch über mehrere diskrete Höhenebenen, um die Trägereinheiten verteilt auf die Höhenebenen zwischeneinander aufzunehmen.

Die Trägereinheit weist vorzugsweise zumindest eine faseroptische Komponente auf (oder bietet zumindest die Möglichkeit zur Aufnahme einer faseroptischen Komponente) und kann beweglich oder unbeweglich bzw. starr zwischen den Montageschienen aufgenommen sein. Die Schienenanordnung kann insbesondere ausgebildet sein, die Trägereinheit entlang wenigstens eines Freiheitsgrades (insbesondere entlang wenigstens eines Translationsfreiheitsgrades) bewegbar, insbesondere translatorisch, zu führen.

Die Schienenanordnung kann sich im Grunde für alle bekannten und zukünftigen Trägereinheiten eignen. Die Erfindung kann sich besonders vorteilhaft zur Verwendung mit optischen Einschubfächern oder Rangierfeldern eignen, gegebenenfalls auch zur Verwendung mit optischelektrischen Einschubfächern bzw. Rangierfeldern. Ein Einschubfach bzw. Rangierfeld beinhaltet optische und/oder elektrische Verteiltechnik und kann beispielsweise einzelne faseroptische und/oder elektrische Module bzw. Kassetten, einzelne faseroptische und/oder elektrische Steckverbinder (insbesondere Buchsen), Einrichtungen zur Speicherung von faseroptischen und/oder elektrischen Leitern und Leitungen oder sonstige optische und/oder elektrische Komponenten aufweisen. Die Trägereinheit kann auch nur zur reinen Aufnahme bzw. Ablage/Aufbewahrung und/oder zum Spleißen von Leitungen ausgebildet sein. Selbst Dummy-Trägereinheiten bzw. Dummy-Rangierfelder können vorgesehen sein, beispielsweise mit Frontplatten, die ausschließlich einen informativen Zweck erfüllen sollen, wie Beschriftungsfelder, oder als Abstandshalter.

Die "erste Montageschiene" und die "zweite Montageschiene" werden nachfolgend mitunter auch gemeinsam als "Montageschienen" bezeichnet.

Es ist vorzugsweise vorgesehen, dass es sich bei den Montageschienen der Schienenanordnung um voneinander unabhängige Bauteile handelt, die auch im montierten Zustand nicht miteinander verbunden sind - abgesehen von der gemeinsamen Verbindung mit der Trägereinheit und der gemeinsamen Verbindung mit dem Verteilerrahmen. Insbesondere kann auf zusätzliche Verbindungsstreben oder Verbindungsbleche zwischen den beiden Montageschienen einer gemeinsamen Schienenanordnung verzichtet werden.

Die Montageschienen können aus einem Metallbauteil ausgebildet sein oder zumindest metallische Komponenten aufweisen. Beispielsweise können die Montageschienen umgeformte Blechteile aufweisen oder als umgeformte Blechteile ausgebildet und zum Beispiel im Rahmen eines Stanz-Biege-Prozesses hergestellt sein. Unter anderem die Herstellung der Montageschienen im Rahmen eines Stanz-Biege-Prozesses kann sich für eine kostengünstige Herstellung im Rahmen einer Massenfertigung sehr gut eignen.

Die Montageschienen können aber auch aus einem Kunststoff ausgebildet sein oder zumindest Kunststoffkomponenten aufweisen. Die Merkmale der Montageschienen lassen sich beispielsweise auch kostengünstig, mit hoher Genauigkeit und geringem Bauteilgewicht im Rahmen eines Spritzgussprozesses herstellen.

An dieser Stelle sei erwähnt, dass die Definition, dass sich die Montageschienen jeweils einstückig über mehrere diskrete Höhenebenen erstrecken, nicht ausschließen soll, dass die Montageschienen jeweils mit zusätzlichen, separaten Bauteilen bzw. Komponenten verbunden sind bzw. dass die Montageschienen zusätzlich noch derartige Bauteile aufweisen. Dies gilt insbesondere für die nachfolgend noch genannten Linearführungsmittel, Auflageflächen, Auflagelaschen, Klemmflächen und/oder Klemmlaschen, bei denen es sich jeweils um einstückig mit der jeweiligen Montageschiene verbundene, alternativ aber auch um von der jeweiligen Montageschiene separate Bauteile, handeln kann. Die vorstehend genannte Definition soll lediglich so verstanden werden, dass die jeweilige Montageschiene einen einstückigen Abschnitt zwischen zumindest zwei diskreten Höhenebenen ausbildet. Der Begriff "einstückig" ist daher nicht zwingend auf die gesamte Montageschiene und alle ihre Merkmale/Komponenten zu verstehen, gleichwohl die Montageschienen auch vollständig einstückig sein können.

Die beiden Montageschienen verlaufen vorzugsweise entlang ihrer Längserstreckungen bzw. ihrer Längsachsen parallel oder zumindest im Wesentlichen parallel zueinander.

Die beiden Montageschienen sind vorzugsweise entlang eines ersten Translationsfreiheitsgrades voneinander beabstandet (entsprechend der "Breite" der Schienenanordnung). Ein zweiter Translationsfreiheitsgrad definiert vorzugsweise die nachfolgend noch erwähnte Ein- und Ausschubrichtung für die Trägereinheit (entsprechend der "Bautiefe" der Schienenanordnung). Die "Bauhöhe" der Schienenanordnung ist vorzugsweise einem dritten Translationsfreiheitsgrad zugeordnet. Die genannten drei Translationsfreiheitsgrade sind gemäß der üblichen Definition jeweils orthogonal zueinander ausgerichtet.

Die Montageschienen können unabhängig voneinander und ohne gegenseitige Verbindung an den Stützen eines Verteilrahmens montierbar sein. Hierzu können die nachfolgend noch erwähnten "Befestigungspunkte" verwendbar sein.

Dadurch, dass zwei voneinander unabhängige Montageschienen für die Befestigung der Trägereinheiten in dem gemeinsamen Verteilerrahmen verwendet werden, kann in dem Verteilerrahmen in der Regel jede vorhandene Befestigungsposition flexibel genutzt und modular mit beliebigen Trägereinheiten bestückt werden. Der Stauraum in dem Verteilerrahmen bzw. Verteilerschrank ist dadurch optimal ausnutzbar. Gleichzeitig wird die Konfigurationsvielfalt in dem Verteilerrahmen maximiert.

Auf die Verwendung eines Gehäuses für die Trägereinheiten, beispielsweise eines Trägergehäuses für ein Einschubfach bzw. für ein Rangierfeld kann vorzugsweise verzichtet werden, wodurch Bauraum eingespart und Konfigurierbarkeit gewonnen wird. Ferner kann die Zugänglichkeit für eine Verkabelung und Montage verbessert sein, wenn ein Gehäuse entfällt.

Die Schienenanordnung kann in dem Verteilerrahmen derart montiert bzw. montierbar sein, dass die erste Montageschiene an einer ersten Vertikalstrebe und die zweite Montageschiene an einer zweiten Vertikalstrebe des Verteilerrahmens befestigt ist, wobei besagte Vertikalstreben vorzugsweise an derselben Seite des Verteilerrahmens angeordnet sind (insbesondere an der Vorderseite des Verteilerrahmens).

Die erste Montageschiene und die zweite Montageschiene sind in dem montierten Zustand der Schienenanordnung in dem Verteilerrahmen vorzugsweise an Montagepunkten (z. B. rasterförmig angeordneten Verschraubungspunkten) derselben Höhenlage bzw. Höhenebene des Verteilerrahmens montiert.

Die erste Montageschiene und die zweite Montageschiene sind in dem montierten Zustand der Schienenanordnung in dem Verteilerrahmen vorzugsweise derart ausgerichtet, dass die Einschubrichtung und/oder Ausschubrichtung bzw. der vorstehend genannte zweite Translationsfreiheitsgrad in derselben Höhenebene bzw. Höhenlage des Verteilerrahmens verläuft. Eine durch die Schienenanordnung geführte Bewegung der Trägereinheit kann daher vorzugsweise auf derselben Höhenlage des Verteilerrahmens verlaufen, also horizontal bzw. parallel zu einer Aufstellfläche des Verteilerrahmens.

Es kann aber auch eine vertikale Führung der Trägereinheit im montierten Zustand der Schienenanordnung vorgesehen sein, also insbesondere eine in dem Verteilerrahmen "hängende" Ausgestaltung. In diesem Fall kann vorgesehen sein, dass die Ein- und Ausschubrichtung bzw. der vorstehend genannte zweite Translationsfreiheitsgrad mehrere Höhenebenen bzw. Höhenlagen des Verteilerrahmens schneidet. Die Ein- und Auszugsrichtung verläuft in diesem Fall daher vertikal bzw. orthogonal zu der Aufstellfläche des Verteilerrahmens.

Auch eine gemischt horizontale und vertikale Ein- und Auszugsbewegung, also eine in Bezug auf die Aufstellfläche des Verteilerrahmens schräge Führung der Trägereinheit, kann vorgesehen sein.

Optional kann ergänzend auch eine dreh- oder schwenkbare Anordnung der Trägereinheit in der Schienenanordnung, also eine zusätzliche Führung entlang zumindest eines Rotationsfreiheitsgrades, vorgesehen sein.

Nachfolgend ist die Erfindung zum leichteren Verständnis im Wesentlichen anhand der rein horizontalen Ein- und Auszugsrichtung beschrieben. Die nachfolgenden Varianten und Weiterbildungen eigenen sich allerdings auch für eine hängende bzw. vertikale Anordnung oder für eine schräge Anordnung, sofern dies technisch nicht ausgeschlossen ist.

Erfindungsgemäß ist vorgesehen, dass jede der Montageschienen auf jeder der Höhenebenen wenigstens ein primäres Linearführungsmittel aufweist, um die jeweilige Trägereinheit parallel zu einer Längsachse der Montageschienen (insbesondere entlang des vorstehend genannten zweiten Translationsfreiheitsgrades bzw. entlang oder entgegen der Einschubrichtung) zu führen.

Die Schienenanordnung vermag die Trägereinheit dadurch in der Art eines Schubfaches bzw. einer Schublade zu führen, was eine besonders gute Zugänglichkeit zu Komponenten der Trägereinheit im montierten Zustand der Schienenanordnung ermöglichen kann. Vorzugsweise, aber nicht notwendigerweise, erfolgt die Führung ausschließlich entlang der Ein- und Ausschubrichtung bzw. entlang des zweiten Translationsfreiheitsgrades.

Das primäre Linearführungsmittel kann einstückig aus der jeweiligen Montageschiene ausgebildet oder als separates Bauteil mit der jeweiligen Montageschiene verbunden bzw. an der jeweiligen Montageschiene befestigt sein.

Erfindungsgemäß ist vorgesehen, dass jede der Montageschienen auf wenigstens einer der Höhenebenen mehrere separate Auflageflächen für das primäre Linearführungsmittel und/oder für die jeweilige Trägereinheit aufweist. Zumindest die Auflageflächen derselben Höhenebene sind dabei entlang der Längsachse der Montageschienen voneinander beabstandet.

Dadurch, dass auf derselben Höhenebene anstelle einer gemeinsamen, einzigen Auflagefläche, mehrere separate, entlang der Längsachse verteilte Auflageflächen für die Trägereinheiten vorgesehen sind, kann durch die mehreren Auflagebereiche die mechanische Stabilität der Schienenanordnung bzw. der Führung der Trägereinheiten optimiert werden. Des Weiteren kann die Herstellung der Montageschienen vereinfacht sein, da anstatt einer vergleichsweise großen Auflagefläche mehrere kleine Auflageflächen ausgebildet werden können. Dies vermag insbesondere die Durchführung eines Stanz-Biege-Prozesses zu vereinfachen.

Im montierten Zustand der Trägereinheiten in der Schienenanordnung kann vorgesehen sein, dass die Trägereinheiten unmittelbar auf den jeweiligen Auflageflächen aufliegen. Alternativ kann vorgesehen sein, dass die primären Linearführungsmittel unmittelbar auf den Auflageflächen aufliegen (bevorzugt). Insbesondere auch eine gemischte Abstützung von Trägereinheit und primärem Linearführungsmittel auf derselben Höhenebene kann allerdings vorgesehen sein, beispielsweise durch gemeinsame Auflageflächen oder eine erste Gruppe von Auflageflächen, die speziell den Trägereinheiten, und eine zweite Gruppe von Auflageflächen, die speziell den primären Linearführungsmitteln zugeordnet sind.

Insbesondere können die folgenden vorteilhaften Varianten der Erfindung vorgesehen sein, wobei die nachfolgende Aufzählung nicht abschließend ist:
- Das primäre Linearführungsmittel ist einteilig bzw. monolithisch mit der jeweiligen Montageschiene ausgebildet; oder
- Das primäre Linearführungsmittel ist als separates Bauteil ausgebildet und liegt auf den entsprechenden Abstützflächen auf (und ist optional auf den Abstützflächen oder an den Abstützlaschen befestigt), ist allerdings nicht anderweitig an der Montageschiene befestigt; oder
- Das primäre Linearführungsmittel ist als separates Bauteil ausgebildet und ist an der Seitenwand der entsprechenden Montageschiene befestigt, liegt allerdings nicht auf den Abstützflächen auf; oder
- Das primäre Linearführungsmittel ist als separates Bauteil ausgebildet, liegt auf den entsprechenden Abstützflächen auf und ist außerdem auch an der Seitenwand der entsprechenden Montageschiene befestigt (bevorzugte Variante).

In einer vorteilhaften Weiterbildung der Erfindung kann vorgesehen sein, dass aneinander angrenzende Höhenebenen weniger als eine Höheneinheit voneinander beabstandet sind, vorzugsweise 2/3 einer Höheneinheit voneinander beabstandet sind, und ganz besonders bevorzugt 1/3 einer Höheneinheit voneinander beabstandet sind.

Insofern vorstehend und nachstehend von einer "Höheneinheit" gesprochen wird, so handelt es sich dabei um eine für Elektronikgehäuse typischerweise verwendete, dem Fachmann geläufige und genormte Maßeinheit, die insbesondere bezogen auf Gerätegehäuse zum Einbau in 19-Zoll-Racks bzw. 19-Zoll-Verteilerrahmen Verwendung findet. Eine Höheneinheit entspricht 1¾ Zoll bzw. 44,45 Millimeter.

Durch die erfindungsgemäß vorgeschlagenen einstückigen Montageschienen mit den jeweiligen Auflageflächen auf den diskreten Höhenebenen lässt sich eine besonders kompakte Anordnung bzw. Aufnahme von Trägereinheiten erzielen, weshalb sich die Erfindung insbesondere vorteilhaft für eine enge Beabstandung der Höhenebenen eignet, wie vorstehend vorgeschlagen. Grundsätzlich kann allerdings eine beliebige Beabstandung der einzelnen Höhenebenen vorgesehen sein, gegebenenfalls auch eine unterschiedliche Beabstandung von benachbarten Höhenanordnungen derselben Montageschiene zur Aufnahme von Trägereinheiten unterschiedlicher Bauhöhe.

Erfindungsgemäß ist vorgesehen, dass eine, mehrere oder alle der Auflageflächen auf jeweiligen Auflagelaschen ausgebildet sind.

Die Auflagelaschen bzw. die Auflageflächen können sich jeweils in Richtung der gegenüberliegenden Montageschiene erstrecken, sowie abschnittsweise entlang der Längsachse der Montageschienen. Die Auflagelaschen bzw. die Auflageflächen erstrecken sich also vorzugsweise entlang des ersten Translationsfreiheitsgrades und entlang des zweiten Translationsfreiheitsgrades.

Vorzugsweise ist die Erstreckung der Auflagelaschen bzw. Auflageflächen in Richtung auf die gegenüberliegende Montageschiene bzw. entlang des ersten Translationsfreiheitsgrads größer als die Erstreckung entlang der Längsachse der Montageschienen bzw. entlang des zweiten Translationsfreiheitsgrads. Es können somit vorzugsweise längliche Auflagelaschen ausgebildet sein, die in Längsrichtung auf die jeweils gegenüberliegende Montageschiene zulaufen. Vorzugsweise berühren sich die sich gegenüberliegenden Auflagelaschen der Montageschienen nicht - die Montageschienen sind also im montierten Zustand vorzugsweise voneinander beabstandet.

Vorzugsweise verlaufen die Auflageflächen lotrecht zu dem dritten Translationsfreiheitsgrad bzw. erstrecken sich orthogonal aus den Seitenwänden der Montageschienen.

Wie bereits vorstehend erwähnt, kann optional vorgesehen sein, dass die Trägereinheiten in der Schienenanordnung schwenkbar bzw. drehbar sind. Beispielsweise kann vorgesehen sein, dass eine der Trägereinheiten einzeln, einige der Trägereinheiten gemeinsam oder alle der Trägereinheiten gemeinsam zunächst in Auszugsrichtung zumindest teilweise aus der Schienenanordnung ausziehbar sind, bis eine Schwenkposition erreicht wird, so dass die Trägereinheiten anschließend teilweise nach unten abklappbar sind. Hierzu kann beispielsweise zumindest eine der Auflagelaschen drehbar oder schwenkbar mit der Seitenwand der jeweiligen Montageschiene verbunden sein.

Grundsätzlich kann eine beliebige Anzahl an Auflagelaschen bzw. Auflageflächen pro Höhenebene vorgesehen sein. Gegebenenfalls können auch bereits zwei Auflagelaschen ausreichend sein, wobei vorzugsweise allerdings mehr als zwei Auflageflächen pro Höhenebene vorgesehen sind, beispielsweise drei, vier, fünf, sechs, sieben, acht oder noch mehr Auflageflächen.

In einer Ausgestaltung der Erfindung kann vorgesehen sein, dass zumindest eine der Auflagelaschen einer gemeinsamen Höhenebene an einem vorderen Endabschnitt der Montageschiene und eine weitere Auflagelasche derselben Höhenebene an einem hinteren Endabschnitt der Montageschiene angeordnet sind.

Die Auflagelaschen sind vorzugsweise einstückig bzw. monolithisch aus der jeweiligen Montageschiene ausgebildet (bevorzugt). Bei den Auflagelaschen kann es sich gegebenenfalls aber auch um separate Bauteile handeln, die formschlüssig, kraftschlüssig und/oder stoffschlüssig mit der jeweiligen Montageschiene verbunden sind. Die separaten Auflagelaschen können beispielsweise mit der jeweiligen Montageschiene verschweißt, verklebt, verschraubt oder verrastet sein.

Gemäß einer bevorzugten Weiterbildung der Erfindung kann vorgesehen sein, dass eine, mehrere oder alle der Auflagelaschen aus einer Seitenwand der korrespondierenden Montageschiene ausgestanzt und in Richtung auf die gegenüberliegende Montageschiene umgebogen sind.

Es kann vorgesehen sein, dass die wenigstens eine Auflagelasche der untersten Höhenebene der Montageschiene ausschließlich umgebogen ist. Auch die Auflagelasche der untersten Höhenebene kann gegebenenfalls aber zuerst ausgestanzt und erst dann umgebogen sein, wie dies hinsichtlich der anderen Auflagelaschen beschrieben wurde.

Insbesondere kann vorgesehen sein, dass auf der untersten Höhenebene der Montageschiene lediglich eine einzige Auflagelasche und damit eine einzige Auflagefläche ausgebildet ist, oder zumindest weniger Auflagelaschen bzw. weniger Auflageflächen als auf den darüberliegenden Höhenebenen. Diese Möglichkeit besteht insbesondere deshalb, da zur Ausbildung der Auflagelasche der untersten Höhenebene keine Ausstanzung aus der Montageschiene erfolgen muss.

In einer Weiterbildung der Erfindung kann vorgesehen sein, dass eine Erstreckung einer, mehrerer oder aller der Auflagelaschen in Richtung auf die jeweils gegenüberliegende Montageschiene größer ist als ein Abstand zwischen den diskreten Höhenebenen, vorzugsweise größer ist als 1/3 einer Höheneinheit, gegebenenfalls sogar größer ist als 2/3 einer Höheneinheit oder größer ist als eine Höheneinheit.

Auf diese Weise kann eine besonders große Erstreckung der Auflagefläche entlang des ersten Translationsfreiheitsgrads bereitgestellt werden, so dass die entsprechenden Trägereinheiten stabil abgestützt und gegen ein Verkippen besonders gut geschützt sind.

In einer Weiterbildung der Erfindung kann vorgesehen sein, dass zumindest bzw. insbesondere die Auflagelaschen von jeweils zwei unmittelbar benachbarten Höhenebenen derselben Montageschiene entlang der Längsachse der Montageschiene voneinander beabstandet angeordnet sind.

Die Erstreckung der Auflagelaschen benachbarter Höhenebenen entlang des ersten Translationsfreiheitsgrades kann insbesondere bei dieser Weiterbildung daher größer sein als der Abstand zwischen den diskreten Höhenebenen. Somit kann sich der Stanzbereich (also z. B. eine fensterförmige Ausnehmung in der Seitenwand der Montageschiene), aus dem die entsprechende Auflagelasche ausgestanzt wurde, entlang der Seitenwand der Montageschiene über mehr als eine Höhenebene erstrecken, ohne mit einem weiteren Stanzbereich oder einer Auflagelasche der benachbarten Höhenebene(n) zu kollidieren.

In einer vorteilhaften Weiterbildung der Erfindung kann vorgesehen sein, dass das wenigstens eine primäre Linearführungsmittel als von der jeweiligen Montageschiene separates Bauteil ausgebildet ist.

Das wenigstens eine primäre Linearführungsmittel kann an der jeweiligen Montageschiene befestigt sein, vorzugsweise (aber nicht notwendigerweise) zerstörungsfrei lösbar befestigt sein. Hierzu kann beispielsweise eine Rastverbindung oder eine Schraubverbindung vorgesehen sein. Grundsätzlich kann sich aber jede formschlüssige, kraftschlüssige und/oder stoffschlüssige Verbindung eignen.

Eine mehrteilige Ausgestaltung bietet besonders großen Gestaltungsspielraum und kann insbesondere auch die Flexibilität des Herstellverfahrens der Schienenanordnung erhöhen, da für die Montageschiene und für die primären Linearführungsmittel gegebenenfalls unterschiedliche und für die jeweilige Komponente besonders geeignete Materialien und Herstellungsverfahren zur Anwendung kommen können.

Das primäre Linearführungsmittel kann in einer bevorzugten Ausgestaltung aus einem Kunststoff ausgebildet sein. Somit kann beispielsweise das primäre Linearführungsmittel durch einen Spritzgießprozess und die Montageschiene durch einen Stanz-Biege-Prozess herstellbar sein. An dieser Stelle sei erwähnt, dass das primäre Linearführungsmittel gegebenenfalls auch aus einem Metallbauteil ausgebildet sein kann oder aus einer Kombination aus Metall und Kunststoff.

In einer Weiterbildung der Erfindung kann vorgesehen sein, dass jede der Montageschienen für jede Höhenebene wenigstens eine Klemmfläche aufweist, die oberhalb von den Auflageflächen derselben Höhenebene angeordnet ist, um das jeweilige primäre Linearführungsmittel und/oder die jeweilige Trägereinheit zwischen den Auflageflächen und der wenigstens einen Klemmfläche aufzunehmen.

Die Klemmflächen und die nachfolgend noch genannten Klemmlaschen können grundsätzlich ausgebildet sein, wie dies bereits hinsichtlich der Auflageflächen und Auflagelaschen beschrieben wurde. Merkmale und Vorteile, die vorstehend für die Auflageflächen und die Auflagelaschen genannt wurden, können daher auch auf die Klemmflächen und die nachfolgend noch genannten Klemmlaschen übertragen werden - und umgekehrt.

Es kann insbesondere vorgesehen sein, dass eine, mehrere oder alle der Klemmflächen auf jeweiligen umgebogenen und vorzugsweise (aber nicht notwendigerweise) zuvor aus einer Seitenwand der Montageschiene ausgestanzten Klemmlaschen ausgebildet sind.

Es kann vorgesehen sein, dass die wenigstens eine Klemmlasche der obersten Höhenebene ausschließlich umgebogen ist.

Durch die Kombination aus Klemmfläche und Auflagefläche kann im Grunde pro Höhenebene eine Art Führungskanal bzw. ein Klemmkanal für die Trägereinheit und/oder für das primäre Linearführungsmittel bereitgestellt werden, was ein Verkippen von Trägereinheit und/oder primärem Linearführungsmittel im montierten Zustand oder während des Ein- oder Ausschiebens verhindern kann.

Es kann vorgesehen sein, dass die Erstreckung der Klemmflächen bzw. Klemmlaschen in Richtung auf die jeweils gegenüberliegende Montageschiene (also entlang der ersten Translationsfreiheitsgrades) kleiner ist als die Erstreckung der Auflageflächen bzw. Auflagelaschen. Die Klemmflächen können somit vorzugsweise kürzer ausgebildet sein als die Auflageflächen.

An dieser Stelle sei erwähnt, dass anstelle von separaten Auflagelaschen und Klemmlaschen auch kombinierte Auflage- und Klemmlaschen vorgesehen sein können, wobei die Auflagefläche auf der Oberseite und die Klemmfläche auf der von der Oberseite abgewandten Unterseite derselben Auflage- und Klemmlasche ausgebildet sein können. Eine flexiblere und präzisere Schienenanordnung lässt sich aber in der Regel durch die Verwendung jeweils separater Auflagelaschen und Klemmlaschen realisieren.

In einer vorteilhaften Weiterbildung der Erfindung kann vorgesehen sein, dass das primäre Linearführungsmittel vorderseitige und/oder rückseitige Bewegungsbegrenzungsmittel aufweist, um die lineare Bewegung der Trägereinheit zu begrenzen.

Somit kann vermieden werden, dass die Trägereinheit rückseitig in den Verteilerrahmen hinein- bzw. aus der Schienenanordnung unbeabsichtigt herausgeschoben wird. Es kann alternativ oder ergänzend auch vorgesehen sein, dass die erste Montageschiene und/oder die zweite Montageschiene ein vorderseitiges Bewegungsbegrenzungsmittel aufweist, um die Bewegung der Trägereinheit zumindest entgegen der Einschubrichtung zu begrenzen, so dass die Trägereinheit nach vorne nicht unbeabsichtigt aus dem Verteilerrahmen bzw. aus der Schienenanordnung vollständig herausgeschoben werden kann.

Das vorderseitige oder rückseitige Bewegungsbegrenzungsmittel kann optional bedarfsweise zerstörungsfrei lösbar bzw. entriegelbar sein, beispielsweise durch Betätigen des nachfolgend noch erwähnten Entriegelungshebels.

Das Bewegungsbegrenzungsmittel kann vorzugsweise als Bestandteil des primären Linearführungsmittels ausgebildet sein (z. B. als elastische Kunststofffahne). Das Bewegungsbegrenzungsmittel kann allerdings auch einteilig mit der Montageschiene ausgebildet sein, beispielsweise als umgeformter Blechabschnitt.

Vorzugsweise ist das Bewegungsbegrenzungsmittel in oder entgegen der Einschubrichtung zumindest abschnittsweise elastisch ausgebildet und weist beispielsweise eine Feder auf, insbesondere eine Blattfeder. Das Bewegungsbegrenzungsmittel kann somit neben der Begrenzung der Einschubtiefe, also neben einer Fixierungs- oder Stopperfunktion, das Herausschieben der Trägereinheit aus der Schienenanordnung in Auszugsrichtung (also entgegen der Einschubrichtung) zumindest unterstützen, beispielsweise die Trägereinheit nach vorne drücken, sobald eine Entriegelung, beispielsweise eine Entriegelung des nachfolgend noch genannten Entriegelungselements bzw. Entriegelungshebels, von dem Servicetechniker betätigt wird.

Vorzugsweise kann vorgesehen sein, dass das primäre Linearführungsmittel ein Entriegelungselement für die Bewegungsbegrenzungsmittel aufweist, beispielsweise einen vorderseitig oder rückseitig angeordneten Entriegelungshebel.

In einer vorteilhaften Weiterbildung der Erfindung kann vorgesehen sein, dass die Montageschienen jeweils Mittel zur Erhöhung der mechanischen Steifigkeit aufweisen.

Auf diese Weise ist es möglich, die Montageschienen beispielsweise als dünne Blechteile auszugestalten und nachträglich zu versteifen, was die Materialkosten für die Herstellung der Montageschienen weiter reduzieren kann.

Beispielsweise kann die Montageschiene eine oder mehrere entlang der Längsachse der Montageschiene ausgebildete Umkantungen, Verstrebungen oder Materialverstärkungen aufweisen, um die mechanische Steifigkeit zu erhöhen. Grundsätzlich können beliebige Ertüchtigungsmaßnahmen vorgesehen sein, um die mechanische Steifigkeit zu erhöhen. Insbesondere kann auch die Verwendung eines Materialverbundes aus zumindest zwei Grundmaterialien vorgesehen sein, beispielsweise eine Metall-Kunststoff-Kombination oder eine Kombination verschiedener Metalle oder Kunststoffe in derselben Montageschiene.

In einer Weiterbildung der Erfindung kann vorgesehen sein, dass jede der Montageschienen wenigstens einen Befestigungspunkt zur Befestigung an einem Verteilerrahmen aufweist.

Insbesondere kann vorgesehen sein, dass der wenigstens eine Befestigungspunkt der ersten Montageschiene und/oder der zweiten Montageschiene an einem Endabschnitt der jeweiligen Montageschiene angeordnet ist. Der Endabschnitt kann beispielsweise an einem in Auszugrichtung vorderen Ende der Montageschiene vorgesehen sein.

Insbesondere kann vorgesehen sein, dass der den Befestigungspunkt aufweisende Endabschnitt quer bzw. orthogonal zu der Ein- / Auszugsrichtung der Trägereinheit verläuft, beispielsweise als Lasche oder Fahne. Der Befestigungspunkt kann aber beispielsweise auch an einer Seitenfläche der Montageschiene ausgebildet sein.

Die Montageschiene kann folglich mit ihrem wenigstens einen Befestigungspunkt, insbesondere einer Ausnehmung, an der vorgesehenen Befestigungsposition bzw. Höhenebene des Verteilerrahmens positioniert und über ein Befestigungsmittel (z. B. eine Schraube, einen Bolzen und/oder eine Käfigmutter) an dem Verteilerrahmen befestigt werden. Das Befestigungsmittel kann einteilig mit der Montageschiene oder dem Verteilerrahmen ausgebildet sein - vorzugsweise handelt es sich aber um ein separates Bauteil.

Beispielsweise kann der Befestigungspunkt der Montageschiene als Bohrung, vorzugsweise als übergroße Bohrung oder als Langloch ausgebildet sein. Durch ein Langloch oder eine übergroße Bohrung kann sichergestellt werden, dass zwischen den beiden voneinander unabhängigen Montageschienen kein unerwünschter Höhenversatz entsteht und Montagetoleranzen bei der Befestigung in dem Verteilerrahmen, sowie Toleranzen des Verteilrahmens und der Montageschienen ausgeglichen werden können.

Der Befestigungspunkt kann auch als Vorsprung, beispielsweise Stift, Steg oder Gewindestift, ausgebildet sein, um die Montageschiene unmittelbar in einer Ausnehmung des Verteilerrahmens zu befestigen. Es kann auch vorgesehen sein, dass der Befestigungspunkt eine Schnappverbindung aufweist.

Vorzugsweise sind die Montageschienen an einer Vorderseite des Verteilerrahmens befestigbar, insbesondere von vorne. Grundsätzlich ist allerdings auch eine Befestigung beispielsweise an der Rückseite des Verteilerrahmens möglich (alternativ oder ergänzend) oder eine Befestigung in einem mittleren Abschnitt des Verteilerrahmens (wiederum alternativ oder ergänzend).

Durch den jeweils wenigstens einen Befestigungspunkt kann jede Montageschiene an einer geeigneten Befestigungsposition des Verteilerrahmens montierbar sein. Vorzugsweise weist der Verteilerrahmen hierzu in definierten, diskret voneinander beabstandeten Höhenlagen bzw. Höhenebenen entsprechende Befestigungspositionen für die einzelnen Montageschienen auf. Die Befestigungspositionen des Verteilerrahmens sind vorzugsweise um jeweils ein Drittel einer Höheneinheit voneinander beabstandet.

Vorzugsweise weist jede der Montageschienen jeweils wenigstens zwei voneinander beabstandete, auf verschiedenen Höhenebenen angeordnete Befestigungspunkte auf. Beispielsweise kann ein erster der Befestigungspunkte auf der untersten von der Montageschiene bereitgestellten Höhenebene und ein zweiter der Befestigungspunkte auf der obersten von der Montageschiene bereitgestellten Höhenebene ausgebildet sein, um eine besonders stabile Befestigung am Verteilerrahmen zu gewährleisten.

An dieser Stelle sei erwähnt, dass es sich bei einem "Verteilerrahmen" insbesondere um ein vollständiges Gestell bzw. eine vollständige Trägerkonstruktion handeln kann, wie dies beispielsweise bei 19-Zoll-Racks bekannt ist. Der Verteilerrahmen kann also beispielsweise zumindest vier Vertikalstreben aufweisen, die in einer Draufsicht die Ecken eines Rechtecks ausbilden, so dass zwischen den Vertikalstreben ein Aufnahmebereich für die Schienenanordnung bzw. für die Trägeranordnung gebildet wird. Im Rahmen der Erfindung ist unter einem Verteilerrahmen allerdings auch bereits eine Anordnung aus weniger als vier Vertikalstreben zu verstehen, also beispielsweise eine in einer Draufsicht dreieckige Anordnung von drei Vertikalstreben oder auch eine Anordnung aus nur zwei voneinander beabstandeten Vertikalstreben.

Der Verteilerrahmen kann optional auch noch Horizontalstreben oder Querstreben aufweisen, die die Vertikalstreben miteinander verbinden. Insbesondere in einer minimalistischen Version des Verteilerrahmens kann allerdings vorgesehen sein, dass der Verteilerrahmen ausschließlich aus zwei Vertikalstreben besteht, die optional mit einer umgebenden Struktur, wie einer Gebäudewand, verbindbar sind, um eine ausreichende Standsicherheit zu gewährleisten. Die vorgeschlagene Schienenanordnung kann grundsätzlich mit allen vorstellbaren und vorstehend genannten Varianten eines Verteilerrahmens verwendbar sein.

In einer vorteilhaften Weiterbildung der Erfindung kann vorgesehen sein, dass die erste Montageschiene und die zweite Montageschiene denselben strukturellen Aufbau aufweisen, jedoch zueinander spiegelsymmetrisch ausgebildet und angeordnet sind.

Optional kann vorgesehen sein, dass zumindest eine der Montageschienen einen Abschnitt zur unmittelbaren oder mittelbaren Befestigung faseroptischer Verteilerköpfe aufweist. Dieser Befestigungsabschnitt kann vorzugsweise an einem Endabschnitt bzw. Ende der Montageschiene ausgebildet sein, insbesondere an einem fahnenartig umgebogenen Endabschnitt.

Die Erfindung betrifft auch eine Trägeranordnung, aufweisend mehrere Trägereinheiten, insbesondere Rangierfelder oder Einschubfächer, und eine Schienenanordnung für die Trägereinheiten gemäß den vorstehenden oder nachfolgenden Ausführungen, wobei die Trägereinheiten auf die verschiedenen Höhenebenen verteilt zwischen den beiden Montageschienen aufgenommen sind (vorzugsweise unmittelbar mit den beiden Montageschienen verbunden).

Vorzugsweise sind die Trägereinheiten dabei derart zwischen den Montageschienen aufgenommen, dass die Trägereinheiten entlang zumindest eines Translationsfreiheitsgrades bewegbar sind, insbesondere entlang der vorstehend bereits erwähnten Ein- und Auszugsrichtung (zweiter Translationsfreiheitsgrad).

Durch die Verwendung separater Montageschienen in der vorgeschlagenen Trägeranordnung kann aufgrund der vorzugsweise gehäuselosen Trägereinheiten eine sehr gute Zugänglichkeit zu den Trägereinheiten bzw. in den Innenraum des Verteilerrahmens bereitgestellt werden.

Gleichzeitig wird eine besonders modulare Zusammenstellung verschiedener Arten und Höhenvarianten von Trägereinheiten möglich.

Gemäß einer Weiterbildung der Erfindung kann vorgesehen sein, dass entlang der den Montageschienen zugewandten Seitenteilen der Trägereinheiten jeweils wenigstens ein sekundäres Linearführungsmittel angeordnet ist. Die sekundären Linearführungsmittel können mit den jeweils zugeordneten primären Linearführungsmitteln der Montageschienen eine Linearführung für die jeweilige Trägereinheit entlang der Längsachse der Montageschienen ausbilden.

Insbesondere kann vorgesehen sein, dass die primären Linearführungsmittel als Nutensteine und die sekundären Linearführungsmittel als korrespondierende Führungsnuten ausgebildet sind - oder umgekehrt. So kann beispielsweise auch eine T-Nut-Verbindung oder eine Schwalbenschwanz-Verbindung realisiert werden.

Das Linearführungspaar aus primärem Linearführungsmittel und sekundärem Linearführungsmittel kann vorzugsweise eine Linearführung in Ein- und Auszugsrichtung, gegebenenfalls aber auch orthogonal hierzu, insbesondere in Vertikalrichtung bzw. entlang des dritten Translationsfreiheitsgrades, bereitstellen. Eine Linearführung in Vertikalrichtung kann vorteilhaft ein Einlegen der Trägereinheit in die Schienenanordnung unterstützen.

Das Linearführungspaar vermag eine Verliersicherheit aufgrund eines zusätzlichen Formschlusses zwischen Montageschiene und Trägereinheit bereitzustellen und die Führung außerdem mechanisch zu stabilisieren.

Die Erfindung betrifft auch ein faseroptisches Verteilersystem, aufweisend einen Verteilerrahmen und wenigstens eine Trägeranordnung gemäß den vorstehenden und nachfolgenden Ausführungen.

Insofern mehrere der Trägeranordnungen innerhalb des Verteilerrahmens vorgesehen sind, sind diese in dem Verteilerrahmen vorzugsweise in verschiedenen Höhenebenen befestigt und/oder in einer hängenden Anordnung in dem Verteilerrahmen angeordnet.

Es kann vorgesehen sein, zwei, drei, vier, fünf, sechs, sieben, acht, neun, zehn, zwanzig, dreißig, vierzig, fünfzig oder noch mehr Trägeranordnungen in verschiedenen Höhenlagen, vorzugsweise unmittelbar übereinander, in einem gemeinsamen Verteilerrahmen zu montieren. Insbesondere kann ein solcher Stapel aus mehreren Trägeranordnungen (Register) bzw. die Schienenbaugruppe sukzessive aufgebaut werden. Der Verteilerrahmen kann beliebig mit Trägereinheiten, insbesondere Rangierfeldern bzw. Trägeranordnungen, bestückt werden.

Durch die geringe Bauhöhe der Montageschienen bzw. Trägeranordnungen kann sich eine sehr feine Höhenunterteilung ergeben, wobei einzelne Trägereinheiten für andere Trägereinheiten als Abdeckung fungieren können, um den Zugang in die faseroptische Infrastruktur im nicht ausgezogenen Zustand auf das Nötigste zu begrenzen, sowie um Staub und Verschmutzungen abhalten.

Optional kann für die oberste Trägereinheit bzw. die oberste Trägeranordnung des Stapels / der Schienenbaugruppe ein separater Deckel bzw. eine separate Abdeckung (z. B. ein Blech) oder eine Dummy-Trägereinheit bzw. ein Dummy-Rangierfeld vorgesehen sein. Grundsätzlich kann ein Deckel bzw. eine separate Abdeckung, insbesondere ein Blech, für eine beliebige Trägereinheit des Stapels vorgesehen sein, also nicht zwingend nur für die oberste Trägereinheit.

Auf vorteilhafte Weise können standardisierte Trägereinheiten unterschiedlicher Funktionalität (beispielsweise Modulträger, Kabelmanagementsysteme, Aufbewahrungslösungen oder Beschriftungsfelder) beliebig miteinander im Gesamtverbund in einem gemeinsamen Verteilerrahmen kombiniert und selbst nach der Montage im Verteilerrahmen unabhängig voneinander getauscht und modifiziert werden. Auf diese Weise kann äußerst gezielt auf Kundenanfragen eingegangen werden, ohne für den jeweiligen Anwendungsfall ein individuelles Produkt produzieren zu müssen.

Vorzugsweise weisen weder die Schienenanordnung, die Trägeranordnung, der Verteilerrahmen oder das faseroptische Verteilersystem ein Trägergehäuse auf. Ein Rangierfeld ohne Trägergehäuse wird mitunter auch als Einschubfach ("Tray") bezeichnet.

Merkmale, die im Zusammenhang mit einem der Gegenstände der Erfindung, namentlich gegeben durch die erfindungsgemäße Schienenanordnung, die Trägeranordnung oder das faseroptische Verteilersystem beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch eine von Anspruch 1 unabhängige, weitere Schienenanordnung für die Aufnahme mehrerer Trägereinheiten für faseroptische Komponenten, insbesondere für Rangierfelder. Diese weitere Schienenanordnung weist eine erste Montageschiene und eine separate zweite Montageschiene auf, wobei die Montageschienen voneinander beabstandet sind und sich jeweils über mehrere diskrete Höhenebenen erstrecken (vorzugsweise, aber nicht notwendigerweise einstückig), um die Trägereinheiten verteilt auf die Höhenebenen zwischeneinander aufzunehmen, wobei jede der Montageschienen auf wenigstens einer der Höhenebenen mehrere separate Auflageflächen aufweist, die entlang der Längsachse der Montageschienen voneinander beabstandet sind. Insbesondere ist ein primäres Linearführungsmittel bei der hier beschriebenen, weiteren Schienenanordnung lediglich optional. Die Trägereinheiten und/oder die (optionalen) primären Linearführungsmittel können im montierten Zustand auf den Auflageflächen aufliegen - dies ist aber nicht unbedingt erforderlich. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser weiteren Schienenanordnung und die Anmelderin behält sich explizit vor, die hier beschriebene weitere Schienenanordnung unabhängig von Patentanspruch 1 zu beanspruchen. Die Anmelderin behält sich außerdem vor, eine Trägeranordnung in der Art von Anspruch 13 und ein faseroptisches Verteilersystem in der Art von Anspruch 15 auf Grundlage der hier beschriebenen, weiteren Schienenanordnung zu beanspruchen.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erste Montageschiene einer Schienenanordnung gemäß einem ersten Ausführungsbeispiel in einer perspektivischen Ansicht;
- Figur 2: eine zweite Montageschiene einer Schienenanordnung gemäß dem ersten Ausführungsbeispiel in einer perspektivischen Ansicht;
- Figur 3: die erste Montageschiene gemäß Figur 1 mit drei mit der Montageschiene verbundenen Linearführungsmitteln in einer perspektivischen Ansicht;
- Figur 4: ein faseroptisches Verteilersystem gemäß der Erfindung mit einem Verteilerrahmen und einer Trägeranordnung aus einer Schienenanordnung gemäß dem ersten Ausführungsbeispiel und einer in der Schienenanordnung aufgenommenen Trägereinheit;
- Figur 5: eine ausschnittsweise vergrößerte Vorderansicht einer in dem Verteilerrahmen montierten ersten Montageschiene gemäß Figur 3;
- Figur 6: eine ausschnittsweise vergrößerte Vorderansicht einer in dem Verteilerrahmen aufgenommenen, vollständig bestückten Trägeranordnung; und
- Figur 7: eine Schienenanordnung der Erfindung gemäß einem weiteren Ausführungsbeispiel.

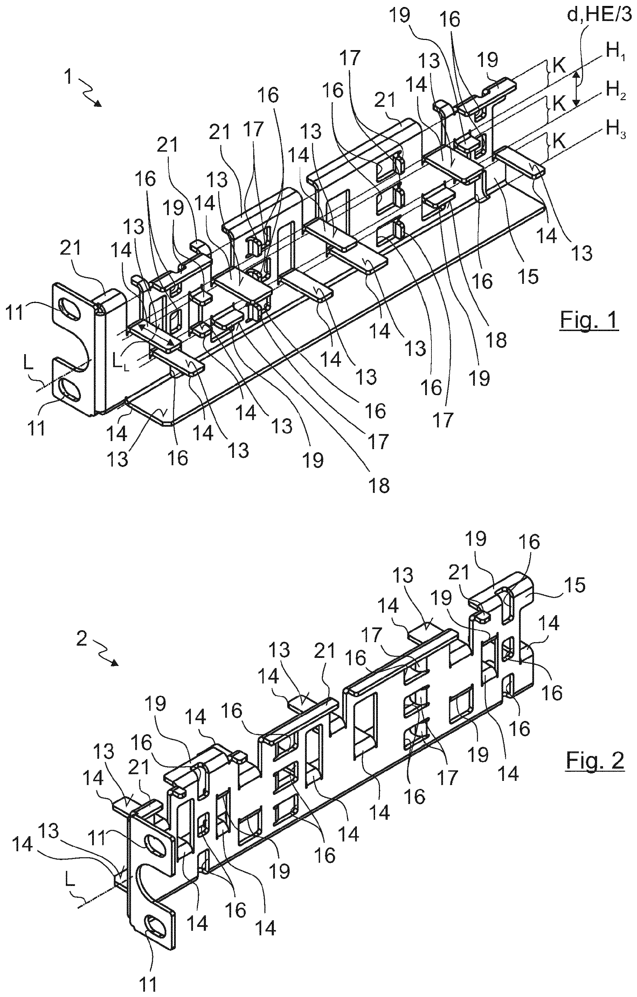

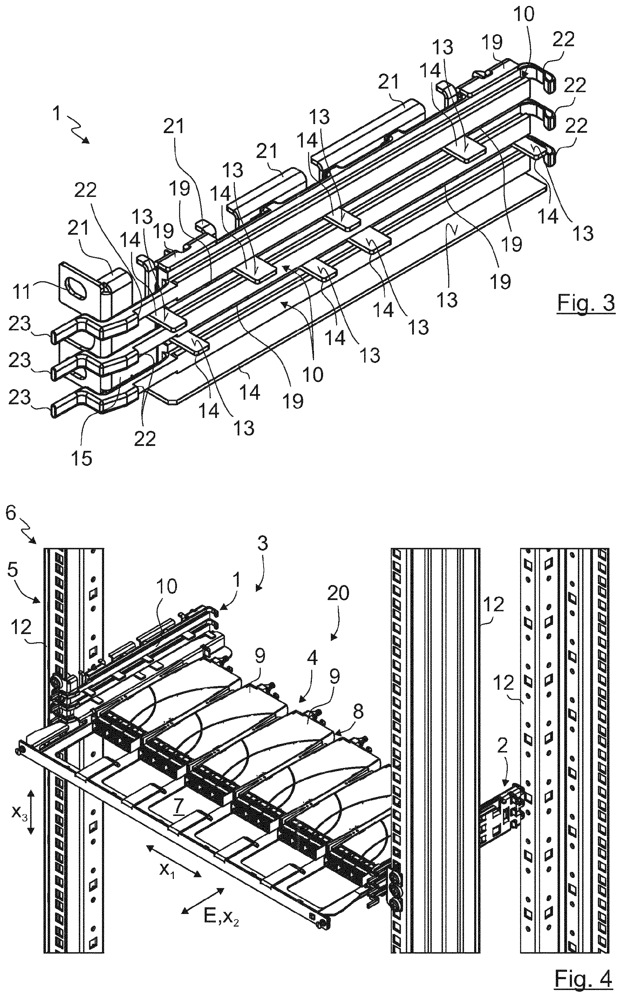

Figur 1 zeigt eine erste Montageschiene 1 und Figur 2 eine zweite Montageschiene 2 gemäß einem Ausführungsbeispiel einer erfindungsgemäßen Schienenanordnung 3 (vgl. Figur 4) für die Aufnahme mehrerer Trägereinheiten 4 (vgl. ebenfalls Figur 4) für faseroptische Komponenten. In den Ausführungsbeispielen sind die Trägereinheiten 4 jeweils als Rangierfelder ausgebildet, was allerdings nicht einschränkend zu verstehen ist. Die Schienenanordnung 3 kann sich grundsätzlich zur Verwendung mit beliebigen Trägereinheiten 4 eignen, insbesondere auch zur Verwendung mit Schubfächern oder Dummy-Elementen.

Die in Figur 4 in einem montierten Zustand innerhalb eines Verteilerrahmens 5 eines faseroptischen Verteilersystems 6 dargestellte Schienenanordnung 3 weist die bereits genannten beiden Montageschienen 1, 2 auf, wobei die Montageschienen 1, 2 voneinander beabstandet sind (entlang eines ersten Freiheitsgrads x₁) und sich jeweils einstückig entlang eines dritten Freiheitsgrads x₃ über mehrere diskrete Höhenebenen H₁, H₂, H₃ erstrecken (vgl. Figur 1). Auf diese Weise können die Trägereinheiten 4 verteilt auf die Höhenebenen H₁, H₂, H₃ zwischen den Montageschienen 1, 2 aufgenommen werden. Beispielhaft ist in Figur 4 eine Trägereinheit 4 auf der untersten Höhenebene H₃ der Schienenanordnung 3 montiert dargestellt.

Die als Rangierfeld ausgebildete Trägereinheit 4 weist ein vorderes Interface bzw. Anschlussfeld 7 und eine hintere Schnittstelle 8 auf. In der Trägereinheit 4 sind mehrere Kassetten 9 angeordnet, die jeweils optische und/oder optisch-elektrische Steckverbinder aufweisen können. Derartige Rangierfelder sind grundsätzlich bekannt und in vielen verschiedenen Varianten verfügbar, weshalb auf nähere Details vorliegend nicht eingegangen wird.

In den Ausführungsbeispielen ist die Schienenanordnung 3 ausgebildet, um die Trägereinheit 4 bzw. das Rangierfeld entlang und entgegen einer Einschubrichtung E (bzw. entlang eines zweiten Translationsfreiheitsgrads x₂ orthogonal zu dem ersten Translationsfreiheitsgrad x₁) bewegbar zu führen. Die Schienenanordnung 3 weist hierzu für jede der Montageschienen 1, 2 auf jeder Höhenebene H₁, H₂, H₃ ein primäres Linearführungsmittel 10 auf, das mit der jeweiligen Montageschiene 1, 2 verbunden ist (vgl. insbesondere Figur 3). Entsprechend sind entlang der den Montageschienen 1, 2 zugewandten Seiten der Trägereinheiten 4 jeweils korrespondierende sekundäre Linearführungsmittel angeordnet (in den Figuren nicht dargestellt). Die sekundären Linearführungsmittel bilden mit den jeweils zugeordneten primären Linearführungsmitteln 10 der Montageschienen 1, 2 eine Linearführung für die jeweilige Trägereinheit 4 entlang der Längsachse L der Montageschienen 1, 2 aus. Beispielhaft sind die primären Linearführungsmittel 10 hierzu als Nutensteine ausgebildet, wobei die sekundären Linearführungsmittel entsprechend korrespondierende Führungsnuten ausbilden können - oder umgekehrt.

Die erste Montageschiene 1 und die zweite Montageschiene 2 weisen in den Ausführungsbeispielen jeweils denselben strukturellen Aufbau auf, sind jedoch zueinander spiegelsymmetrisch ausgebildet und angeordnet. Jede der Montageschienen 1, 2 weist wenigstens einen Befestigungspunkt 11, in den Ausführungsbeispielen jeweils zwei Befestigungspunkte 11, zur Befestigung an dem Verteilerrahmen 5 auf. Die Befestigungspunkte 11 sind hierfür auf verschiedenen Höhenebenen H₁, H₂, H₃ jeweiliger umgebogener, seitlicher Abschnitte (Fahnen) der jeweiligen Montageschiene 1, 2 angeordnet. Zur Ausgleichsmöglichkeit von Toleranzen sind die Befestigungspunkte 11 als Langlochbohrungen realisiert. Diese Befestigungspunkte 11 bzw. Langlochbohrungen können schließlich fluchtend zu den gewünschten Montagepunkten des Verteilerrahmens 5 bzw. zu den Montagepunkten der zur Befestigung vorgesehenen Vertikalstrebe 12 des Verteilerrahmens 5 angeordnet werden (vgl. Figuren 4 bis 6), so dass die erste Montageschiene 1 und die zweite Montageschiene 2 vorzugsweise in dem Verteilerrahmen 5 jeweils auf denselben Höhenlagen befestigt sind.

In der Regel sind die Höhenlagen bzw. die Befestigungspunkte des Verteilerrahmens 5 in einem definierten Raster angeordnet und jeweils um ein Drittel einer Höheneinheit HE voneinander beabstandet. Vorzugsweise sind die aneinander angrenzenden Höhenebenen H₁, H₂, H₃ der Schienenanordnung 3 bzw. der Montageschienen 1, 2 dabei weniger als eine Höheneinheit HE voneinander beabstandet, vorzugsweise 2/3 einer Höheneinheit HE voneinander beabstandet und ganz besonders bevorzugt 1/3 einer Höheneinheit HE voneinander beabstandet.

Es wird vorgeschlagen, dass jede der Montageschienen 1, 2 auf wenigstens einer der Höhenebenen H₁, H₂, H₃ mehrere separate Auflageflächen 13 für das primäre Linearführungsmittel 10 und/oder für die jeweilige Trägereinheit 4 aufweist. Dabei sind die Auflageflächen 13 derselben Höhenebene H₁, H₂, H₃ entlang der Längsachse L der Montageschienen 1, 2 jeweils voneinander beabstandet. In den Ausführungsbeispielen sind die Auflageflächen 13 jeweils auf Auflagelaschen 14 ausgebildet, die sich in Richtung auf die gegenüberliegende Montageschiene 1, 2 sowie abschnittsweise entlang der Längsachse L der Montageschienen 1, 2 erstrecken. Die Auflagelaschen 14 können beispielsweise dadurch realisiert werden, dass diese aus einer Seitenwand 15 der korrespondierenden Montageschiene 1, 2 ausgestanzt und in Richtung auf die gegenüberliegende Montageschiene 1, 2 umgebogen sind. Die Auflagelasche 14 der untersten Höhenebene H₃ kann dabei auch nur ausschließlich umgebogen sein, wie in den Ausführungsbeispielen gezeigt. Dabei kann auf der untersten Höhenebene H₃ der jeweiligen Montageschiene 1, 2 gegebenenfalls auch nur eine einzige Auflagelasche 14 bzw. eine einzige Auflagefläche 13 bereitgestellt werden. Die Auflageflächen 13 für die weiteren Höhenebenen H₁, H₂, H₃ werden hingegen beispielhaft durch jeweils vier Auflagelaschen 14 ausgebildet, die entlang der Längsachse L der Montageschienen 1, 2 verteilt angeordnet sind.

Es hat sich gezeigt, dass sich eine besonders hohe mechanische Stabilität erreichen lässt, wenn die Längserstreckung L_{L} der Auflagelaschen 14 in Richtung auf die jeweils gegenüberliegende Montageschiene 1, 2 größer ist als ein Abstand d zwischen den diskreten Höhenebenen H₁, H₂, H₃, vorzugsweise größer ist als 1/3 einer Höheneinheit HE (vgl. Figur 1). Diesbezüglich ist in dem Ausführungsbeispiel vorgesehen, dass die Auflagelaschen 14 von jeweils zwei unmittelbar benachbarten Höhenebenen H₁, H₂, H₃ derselben Montageschiene 1, 2 entlang der Längsachse L der Montageschiene 1, 2 voneinander beabstandet angeordnet sind. Auf diese Weise kann sich ein ausgestanzter Bereich (Stanzbereich) über mehrere Höhenebenen H₁, H₂, H₃ erstrecken, ohne mit einem Stanzbereich oder einer Auflagelasche 14 der angrenzenden Höhenebene H₁, H₂, H₃ zu kollidieren.

Das vorstehend bereits erwähnte primäre Linearführungsmittel 10 ist als von der jeweiligen Montageschiene 1, 2 separates Bauteil ausgebildet und an der jeweiligen Montageschiene 1, 2 befestigt. Vorzugsweise erfolgt diese Befestigung zerstörungsfrei lösbar, beispielsweise über eine Rastverbindung oder eine Schraubverbindung. In den Ausführungsbeispielen sind hierzu Befestigungsausnehmungen 16 und Befestigungslaschen 17 in der Seitenwand 15 der jeweiligen Montageschiene 1, 2 ausgebildet, die eine Verrastung korrespondierender Gegenbefestigungsmittel (nicht dargestellt) des primären Linearführungsmittels 10 ermöglichen können.

Um eine mechanisch noch stabilere Befestigung der Trägereinheiten 4 und/oder primären Linearführungsmittel 10 in der Schienenanordnung 3 zu ermöglichen und insbesondere um ein seitliches Verkippen zu verhindern, kann vorgesehen sein, dass jede der Montageschienen 1, 2 für jede Höhenebene H₁, H₂, H₃ wenigstens eine Klemmfläche 18 aufweist, die oberhalb von den Auflageflächen 13 derselben Höhenebene H₁, H₂, H₃ angeordnet ist. Auf diese Weise kann das jeweilige primäre Linearführungsmittel 10 und/oder die jeweilige Trägereinheit 4 zwischen den Auflageflächen 13 und den Klemmflächen 18 aufgenommen werden. In den Ausführungsbeispielen sind die Klemmflächen 18 ebenfalls auf jeweiligen umgebogenen Klemmlaschen 19 ausgebildet, die optional ausgestanzt, gegebenenfalls (vgl. oberste Höhenebene H₁) aber auch ausschließlich umgebogen sein können. Zwischen den Klemmflächen 18 und den Auflageflächen 13 wird somit für jede Höhenebene H₁, H₂, H₃ ein Klemmkanal K ausgebildet (vgl. Figur 1).

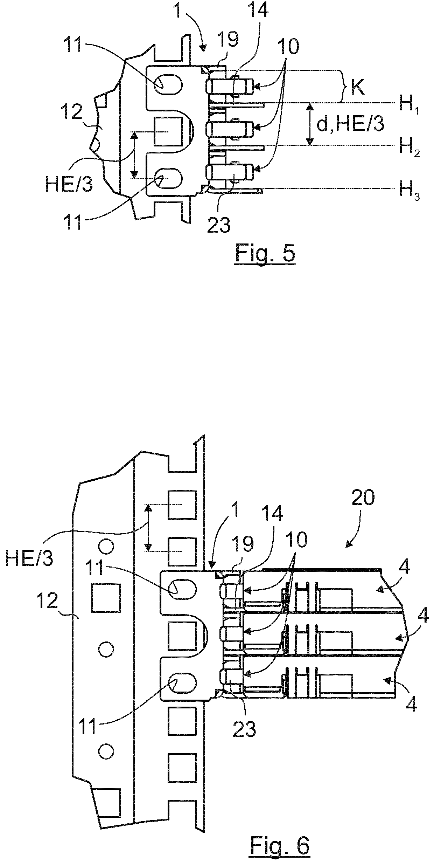

Um die Verklemmung bzw. Abstützung durch Klemmflächen 18 und Auflageflächen 13 weiter zu verdeutlichen, zeigt Figur 5 eine Vorderansicht der Schienenanordnung 3 in einem montierten Zustand innerhalb des Verteilerrahmens 5. Dabei ist gut erkennbar, dass die primären Linearführungsmittel 10 zwischen den Klemmlaschen 19 und den Auflagelaschen 14 jeweils aufgenommen sind. Figur 6 zeigt dieselbe Schienenanordnung 3 in ihrem montierten Zustand an dem Verteilerrahmen 5 als Teil einer Trägeranordnung 20 zusammen mit den montierten Rangierfeldern bzw. Trägereinheiten 4, die auf die verschiedenen Höhenebenen H₁, H₂, H₃ verteilt zwischen den beiden Montageschienen 1, 2 aufgenommen sind.

Es kann vorgesehen sein, dass die Montageschienen 1, 2 jeweils Mittel zur Erhöhung der mechanischen Steifigkeit aufweisen. Dabei kann es sich beispielsweise um entlang der Längsachse L der Montageschiene 1, 2 ausgebildete Umkantungen 21 handeln (vgl. u. a. Figur 1). Die zur Erhöhung der mechanischen Steifigkeit dienenden Umkantungen 21 können gegebenenfalls auch mit Auflagelaschen 14 und/oder Klemmlaschen 19 identisch sein.

Wie sich besonders gut anhand von Figur 3 erkennen lässt, weist das primäre Linearführungsmittel 10 vorderseitige und rückseitig Bewegungsbegrenzungsmittel 22 auf, um die lineare Bewegung der Trägereinheit 4 zu begrenzen. Beispielhaft ist für das vorderseitige Bewegungsbegrenzungsmittel 22 ein Entriegelungselement 23 in Form eines Entriegelungshebels dargestellt.

Wie bereits erwähnt, zeigt Figur 4 ein faseroptisches Verteilersystem 6 aus einem Verteilerrahmen 5 und einer der vorstehend beschriebenen Trägeranordnungen 20, die in dem Verteilerrahmen 5 befestigt ist. Grundsätzlich kann eine beliebige Anzahl von Trägeranordnungen 20 in dem Verteilerrahmen 5 vorgesehen sein.

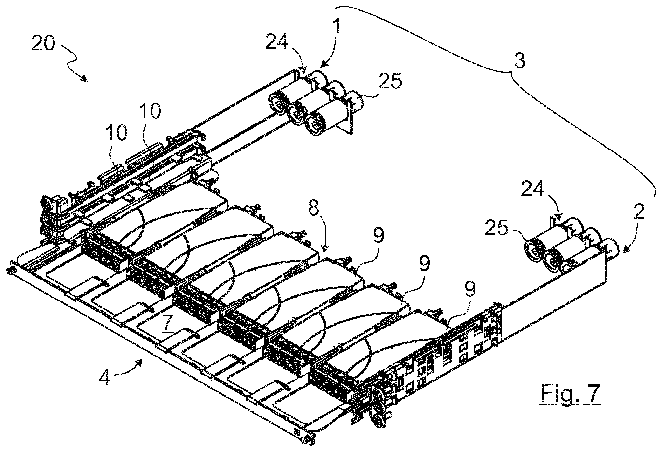

Figur 7 zeigt außerdem noch eine vorteilhafte Weiterbildung der vorgeschlagenen Trägeranordnung 20, bei der die Montageschienen 1, 2 der Schienenanordnung 3 an ihrem rückseitigen Endabschnitt Befestigungsbereiche 24 zur Befestigung faseroptischer Verteilerköpfe 25 aufweist.

## Patentansprüche

1. Schienenanordnung (3) für die Aufnahme mehrerer Trägereinheiten (4) für faseroptische Komponenten, insbesondere für Rangierfelder, aufweisend eine erste Montageschiene (1) und eine separate zweite Montageschiene (2), wobei die Montageschienen (1, 2) voneinander beabstandet sind und sich jeweils einstückig über mehrere diskrete Höhenebenen (H₁, H₂, H₃) erstrecken, um die Trägereinheiten (4) verteilt auf die Höhenebenen (H₁, H₂, H₃) zwischeneinander aufzunehmen, wobei jede der Montageschienen (1, 2) auf jeder der Höhenebenen (H₁, H₂, H₃) wenigstens ein primäres Linearführungsmittel (10) aufweist, um die jeweilige Trägereinheit (4) parallel zu einer Längsachse (L) der Montageschienen (1, 2) zu führen,
**dadurch gekennzeichnet, dass**
jede der Montageschienen (1, 2) auf wenigstens einer der Höhenebenen (H₁, H₂, H₃) mehrere separate Auflageflächen (13) für das primäre Linearführungsmittel (10) und/oder für die jeweilige Trägereinheit (4) aufweist, die entlang der Längsachse (L) der Montageschienen (1, 2) voneinander beabstandet sind, wobei eine, mehrere oder alle der Auflageflächen (13) auf jeweiligen Auflagelaschen (14) ausgebildet sind.

2. Schienenanordnung (3) nach Anspruch 1,
**dadurch gekennzeichnet, dass**
aneinander angrenzende Höhenebenen (H₁, H₂, H₃) weniger als eine Höheneinheit (HE) voneinander beabstandet sind, vorzugsweise 2/3 einer Höheneinheit (HE) voneinander beabstandet sind, und ganz besonders bevorzugt 1/3 einer Höheneinheit (HE) voneinander beabstandet sind.

3. Schienenanordnung (3) nach Anspruch 1 oder 2,
**dadurch gekennzeichnet, dass**
sich die Auflagelaschen (14) jeweils in Richtung der gegenüberliegenden Montageschiene (1, 2), sowie abschnittsweise entlang der Längsachse (L) der Montageschienen (1, 2) erstrecken.

4. Schienenanordnung (3) nach einem der Ansprüche 1 bis 3,
**dadurch gekennzeichnet, dass**
eine, mehrere oder alle der Auflagelaschen (14) aus einer Seitenwand (15) der korrespondierenden Montageschiene (1, 2) ausgestanzt und in Richtung auf die gegenüberliegende Montageschiene (1, 2) umgebogen sind, wobei vorzugsweise die wenigstens eine Auflagelasche (14) der untersten Höhenebene (H₃) ausschließlich umgebogen ist.

5. Schienenanordnung (3) nach Anspruch 3 oder 4,
**dadurch gekennzeichnet, dass**
eine Erstreckung (L_{L}) einer, mehrerer oder aller der Auflagelaschen (14) in Richtung auf die jeweils gegenüberliegende Montageschiene (1, 2) größer ist als ein Abstand (d) zwischen den diskreten Höhenebenen (H₁, H₂, H₃), vorzugsweise größer ist als 1/3 einer Höheneinheit (HE).

6. Schienenanordnung (3) nach einem der Ansprüche 1 bis 5,
**dadurch gekennzeichnet, dass**
zumindest die Auflagelaschen (14) von jeweils zwei unmittelbar benachbarten Höhenebenen (H₁, H₂, H₃) derselben Montageschiene (1, 2) entlang der Längsachse (L) der Montageschiene (1, 2) voneinander beabstandet angeordnet sind.

7. Schienenanordnung (3) nach einem der Ansprüche 1 bis 6,
**dadurch gekennzeichnet, dass**
das wenigstens eine primäre Linearführungsmittel (10) als von der jeweiligen Montageschiene (1, 2) separates Bauteil ausgebildet und an der jeweiligen Montageschiene (1, 2) befestigt ist, vorzugsweise zerstörungsfrei lösbar befestigt ist, beispielsweise über eine Rastverbindung oder eine Schraubverbindung.

8. Schienenanordnung (3) nach einem der Ansprüche 1 bis 7,
**dadurch gekennzeichnet, dass**
jede der Montageschienen (1, 2) für jede Höhenebene (H₁, H₂, H₃) wenigstens eine Klemmfläche (18) aufweist, die oberhalb von den Auflageflächen (13) derselben Höhenebene (H₁, H₂, H₃) angeordnet ist, um das jeweilige primäre Linearführungsmittel (10) und/oder die jeweilige Trägereinheit (4) zwischen den Auflageflächen (13) und der wenigstens einen Klemmfläche (18) aufzunehmen, wobei eine, mehrere oder alle der Klemmflächen (18) vorzugsweise auf jeweiligen umgebogenen Klemmlaschen (19) ausgebildet sind.

9. Schienenanordnung (3) nach einem der Ansprüche 1 bis 8,
**dadurch gekennzeichnet, dass**
das primäre Linearführungsmittel (10) vorderseitige und/oder rückseitige Bewegungsbegrenzungsmittel (22) aufweist, um die lineare Bewegung der Trägereinheit (4) zu begrenzen, wobei das primäre Linearführungsmittel (10) vorzugsweise ein Entriegelungselement (23) für die Bewegungsbegrenzungsmittel (22) aufweist, beispielsweise einen vorderseitig angeordneten Entriegelungshebel.

10. Schienenanordnung (3) nach einem der Ansprüche 1 bis 9,
**dadurch gekennzeichnet, dass**
die Montageschienen (1, 2) jeweils Mittel zur Erhöhung der mechanischen Steifigkeit aufweisen, insbesondere eine oder mehrere entlang der Längsachse (L) der Montageschiene (1, 2) ausgebildete Umkantungen (21), Verstrebungen und/oder Materialverstärkungen.

11. Schienenanordnung (3) nach einem der Ansprüche 1 bis 10,
**dadurch gekennzeichnet, dass**
die erste Montageschiene (1) und die zweite Montageschiene (2) denselben strukturellen Aufbau aufweisen, jedoch zueinander spiegelsymmetrisch ausgebildet und angeordnet sind.

12. Schienenanordnung (3) nach einem der Ansprüche 1 bis 11,
**dadurch gekennzeichnet, dass**
jede der Montageschienen (1, 2) wenigstens einen Befestigungspunkt (11) zur Befestigung an einem Verteilerrahmen (5) aufweist, vorzugsweise jeweils wenigstens zwei voneinander beabstandete, auf verschiedenen Höhenebenen (H₁, H₂, H₃) angeordnete Befestigungspunkte (11).

13. Trägeranordnung (20), aufweisend mehrere Trägereinheiten (4), insbesondere Rangierfelder, und eine Schienenanordnung (3) für die Trägereinheiten (4) gemäß einem der Ansprüche 1 bis 12, wobei die Trägereinheiten (4) auf die verschiedenen Höhenebenen (H₁, H₂, H₃) verteilt zwischen den beiden Montageschienen (1, 2) aufgenommen sind.

14. Trägeranordnung (20) nach Anspruch 13,
**dadurch gekennzeichnet, dass**
entlang der den Montageschienen (1, 2) zugewandten Seitenteilen der Trägereinheiten (4) jeweils wenigstens ein sekundäres Linearführungsmittel angeordnet ist, wobei die sekundären Linearführungsmittel mit den jeweils zugeordneten primären Linearführungsmitteln (10) der Montageschienen (1, 2) eine Linearführung für die jeweilige Trägereinheit (4) entlang der Längsachse (L) der Montageschienen (1, 2) ausbilden, wobei die primären Linearführungsmittel (10) vorzugsweise als Nutensteine und die sekundären Linearführungsmittel als korrespondierende Führungsnuten ausgebildet sind.

15. Faseroptisches Verteilersystem (6), aufweisend einen Verteilerrahmen (5) und wenigstens eine Trägeranordnung (20) gemäß Anspruch 13 oder 14, die in dem Verteilerrahmen (5) befestigt ist.

## Claims

1. Rail arrangement (3) for receiving multiple carrier units (4) for fibre-optic components, in particular for patch panels, having a first mounting rail (1) and a separate second mounting rail (2), wherein the mounting rails (1, 2) are spaced apart from one another and each extend integrally over multiple discrete height levels (H₁, H₂, H₃), in order to receive the carrier units (4) between them so as to be distributed among the height levels (H₁, H₂, H₃), wherein each of the mounting rails (1, 2) has at least one primary linear guide means (10) at each of the height levels (H₁, H₂, H₃), in order to guide the respective carrier unit (4) parallel to a longitudinal axis (L) of the mounting rails (1, 2),
**characterized in that**
each of the mounting rails (1, 2) has, at at least one of the height levels (H₁, H₂, H₃), multiple separate bearing surfaces (13) for the primary linear guide means (10) and/or for the respective carrier unit (4), said bearing surfaces being spaced apart from one another along the longitudinal axis (L) of the mounting rails (1, 2), wherein one, multiple or all the bearing surfaces (13) are formed on respective bearing tabs (14).

2. Rail arrangement (3) according to Claim 1,
**characterized in that**
height levels (H₁, H₂, H₃) which adjoin one another are spaced apart from one another by less than one rack unit (U), preferably are spaced apart from one another by 2/3 of a rack unit (U), and very particularly preferably are spaced apart from one another by 1/3 of a rack unit (U).

3. Rail arrangement (3) according to Claim 1 or 2,
**characterized in that**
the bearing tabs (14) each extend in the direction of the opposite mounting rail (1, 2) and partially along the longitudinal axis (L) of the mounting rails (1, 2).

4. Rail arrangement (3) according to one of Claims 1 to 3,
**characterized in that**
one, multiple or all the bearing tabs (14) are stamped out of a side wall (15) of the corresponding mounting rail (1, 2) and bent over in the direction of the opposite mounting rail (1, 2), wherein, preferably, the at least one bearing tab (14) of the lowest height level (H₃) is exclusively bent over.

5. Rail arrangement (3) according to Claim 3 or 4,
**characterized in that**
an extent (L_{L}) of one, multiple or all the bearing tabs (14) in the direction of the respectively opposite mounting rail (1, 2) is greater than a distance (d) between the discrete height levels (H₁, H₂, H₃), preferably is greater than 1/3 of a rack unit (U).

6. Rail arrangement (3) according to one of Claims 1 to 5,
**characterized in that**
at least the bearing tabs (14) of in each case two directly adjacent height levels (H₁, H₂, H₃) of the same mounting rail (1, 2) are arranged spaced apart from one another along the longitudinal axis (L) of the mounting rail (1, 2).

7. Rail arrangement (3) according to one of Claims 1 to 6,
**characterized in that**
the at least one primary linear guide means (10) is in the form of a component which is separate from the respective mounting rail (1, 2), and is fastened, preferably is fastened so as to be detachable without being destroyed, to the respective mounting rail (1, 2), for example by way of a latching connection or a screw connection.

8. Rail arrangement (3) according to one of Claims 1 to 7,
**characterized in that**
each of the mounting rails (1, 2) has, for each height level (H₁, H₂, H₃), at least one clamping surface (18) which is arranged above the bearing surfaces (13) of the same height level (H₁, H₂, H₃), in order to receive the respective primary linear guide means (10) and/or the respective carrier unit (4) between the bearing surfaces (13) and the at least one clamping surface (18), wherein one, multiple or all the clamping surfaces (18) are preferably formed on respective bent-over clamping tabs (19).

9. Rail arrangement (3) according to one of Claims 1 to 8,
**characterized in that**
the primary linear guide means (10) has front-side and/or rear-side movement limiting means (22), in order to limit the linear movement of the carrier unit (4), wherein the primary linear guide means (10) preferably has an unlocking element (23) for the movement limiting means (22), for example an unlocking lever arranged on the front side.

10. Rail arrangement (3) according to one of Claims 1 to 9,
**characterized in that**
the mounting rails (1, 2) each have means for increasing the mechanical rigidity, in particular one or more folded-over edges (21), struts and/or material reinforcements formed along the longitudinal axis (L) of the mounting rail (1, 2).

11. Rail arrangement (3) according to one of Claims 1 to 10,
**characterized in that**
the first mounting rail (1) and the second mounting rail (2) have the same structural design, but are formed and arranged mirror-symmetrically with respect to one another.

12. Rail arrangement (3) according to one of Claims 1 to 11,
**characterized in that**
each of the mounting rails (1, 2) has at least one fastening point (11) for fastening to a distribution frame (5), preferably in each case at least two fastening points (11) which are spaced apart from one another and are arranged at different height levels (H₁, H₂, H₃).

13. Carrier arrangement (20), having multiple carrier units (4), in particular patch panels, and a rail arrangement (3) for the carrier units (4) according to one of Claims 1 to 12, wherein the carrier units (4) are received between the two mounting rails (1, 2) so as to be distributed among the different height levels (H₁, H₂, H₃).

14. Carrier arrangement (20) according to Claim 13,
**characterized in that**
in each case at least one secondary linear guide means is arranged along those side parts of the carrier units (4) which face towards the mounting rails (1, 2), wherein the secondary linear guide means form, with the respectively assigned primary linear guide means (10) of the mounting rails (1, 2), a linear guide for the respective carrier unit (4) along the longitudinal axis (L) of the mounting rails (1, 2), wherein the primary linear guide means (10) are preferably in the form of sliding blocks and the secondary linear guide means are in the form of corresponding guide grooves.

15. Fibre-optic distribution system (6), having a distribution frame (5) and at least one carrier arrangement (20) according to Claim 13 or 14 which is fastened in the distribution frame (5).

## Revendications

1. Dispositif de rails (3) destiné à recevoir plusieurs unités de support (4) pour des composants à fibres optiques, en particulier pour des panneaux de brassage, comprenant un premier rail de montage (1) et un deuxième rail de montage séparé (2), les rails de montage (1, 2) étant espacés l'un de l'autre et s'étendant chacun d'un seul tenant sur plusieurs plans de hauteur discrets (H₁, H₂, H₃) afin de recevoir les unités de support (4) réparties entre elles sur les plans de hauteur (H₁, H₂, H₃), chacun des rails de montage (1, 2) présentant sur chacun des plans de hauteur (H₁, H₂, H₃) au moins un moyen de guidage linéaire primaire (10) pour guider l'unité de support respective (4) parallèlement à un axe longitudinal (L) des rails de montage (1, 2),
**caractérisé en ce que**
chacun des rails de montage (1, 2) comporte, sur au moins l'un des niveaux de hauteur (H₁, H₂, H₃), plusieurs surfaces d'appui séparées (13) pour le moyen de guidage linéaire primaire (10) et/ou pour l'unité de support respective (4), qui sont espacées les unes des autres le long de l'axe longitudinal (L) des rails de montage (1, 2), une, plusieurs ou toutes les surfaces d'appui (13) étant formées sur des pattes d'appui respectives (14).

2. Dispositif de rails (3) selon la revendication 1,
**caractérisé en ce que**
les plans de hauteur adjacents (H₁, H₂, H₃) sont espacés les uns des autres de moins d'une unité de hauteur (HE), de préférence de 2/3 d'une unité de hauteur (HE), et de manière particulièrement préférée de 1/3 d'une unité de hauteur (HE).

3. Dispositif de rails (3) selon la revendication 1 ou 2,
**caractérisé en ce que**
les pattes d'appui (14) s'étendent chacune dans la direction du rail de montage opposé (1, 2) et par sections le long de l'axe longitudinal (L) des rails de montage (1, 2).

4. Dispositif de rails (3) selon l'une des revendications 1 à 3,
**caractérisé en ce que**
une, plusieurs ou toutes les pattes d'appui (14) sont poinçonnées dans une paroi latérale (15) du rail de montage correspondant (1, 2) et sont pliées en direction du rail de montage opposé (1, 2), de préférence au moins une patte d'appui (14) du niveau de hauteur le plus bas (H₃) étant exclusivement repliée.

5. Dispositif de rails (3) selon la revendication 3 ou 4,
**caractérisé en ce**
**qu'**une extension (L_{L}) d'une, de plusieurs ou de toutes les pattes d'appui (14) en direction du rail de montage respectivement opposé (1, 2) est supérieure à une distance (d) entre les plans de hauteur discrets (H₁, H₂, H₃), de préférence supérieure à 1/3 d'une unité de hauteur (HE).

6. Dispositif de rails (3) selon l'une des revendications 1 à 5,
**caractérisé en ce que**
au moins les pattes d'appui (14) de deux niveaux de hauteur immédiatement adjacents (H₁, H₂, H₃) du même rail de montage (1, 2) sont espacées les unes des autres le long de l'axe longitudinal (L) du rail de montage (1, 2).

7. Dispositif de rails (3) selon l'une des revendications 1 à 6,
**caractérisé en ce que**
le au moins un moyen de guidage linéaire primaire (10) est conçu comme un composant séparé du rail de montage respectif (1, 2) et est fixé au rail de montage respectif (1, 2), de préférence de manière amovible sans destruction, par exemple via une connexion à encliquetage ou une connexion vissée.

8. Dispositif à rails (3) selon l'une des revendications 1 à 7,
**caractérisé en ce que**
chacun des rails de montage (1, 2) comporte, pour chaque niveau de hauteur (H₁, H₂, H₃), au moins une surface de serrage (18) qui est disposée au-dessus des surfaces d'appui (13) du même niveau de hauteur (H₁, H₂, H₃) afin de recevoir le moyen de guidage linéaire primaire respectif (10) et/ou l'unité de support respective (4) entre les surfaces d'appui (13) et la au moins une surface de serrage (18), une, plusieurs ou toutes les surfaces de serrage (18) étant de préférence formées sur des pattes de serrage repliées respectives (19).

9. Dispositif à rails (3) selon l'une des revendications 1 à 8,
**caractérisé en ce que**
le moyen de guidage linéaire primaire (10) dispose de moyens de limitation de mouvement (22) vers l'avant ou vers l'arrière pour limiter les mouvements de l'unité de support, le moyen de guidage linéaire primaire (10) comportant de préférence un élément de déverrouillage (23) pour les moyens de limitation de mouvement (22), par exemple un levier de déverrouillage disposé à l'avant.

10. Dispositif de rails (3) selon l'une des revendications 1 à 9,
**caractérisé en ce que**
les rails de montage (1, 2) comportent chacun des moyens pour augmenter la rigidité mécanique, en particulier un ou plusieurs rebords (21), entretoises et/ou renforcements de matière formés le long de l'axe longitudinal (L) du rail de montage (1, 2).

11. Dispositif de rails (3) selon l'une des revendications 1 à 10,
**caractérisé en ce que**
le premier rail de montage (1) et le deuxième rail de montage (2) présentent la même structure, mais sont conçus et disposés de manière symétrique l'un par rapport à l'autre.

12. Dispositif de rails (3) selon l'une des revendications 1 à 11,
**caractérisé en ce que**
chacun des rails de montage (1, 2) présente au moins un point de fixation (11) pour la fixation à un cadre de distribution (5), de préférence au moins deux points de fixation (11) espacés l'un de l'autre, disposés à différents niveaux de hauteur (H₁, H₂, H₃).

13. Dispositif de support (20) comprenant plusieurs unités de support (4), en particulier des panneaux de brassage, et un dispositif de rails (3) pour les unités de support (4) selon l'une des revendications 1 à 12, les unités de support (4) étant réparties sur les différents niveaux de hauteur (H₁, H₂, H₃) entre les deux rails de montage (1, 2).

14. Dispositif de support (20) selon la revendication 13,
**caractérisé en ce que**
au moins un moyen de guidage linéaire secondaire est disposé le long des parties latérales des unités de support (4) tournées vers les rails de montage (1, 2), les moyens de guidage linéaire secondaires formant avec les moyens de guidage linéaire primaires (10) associés respectifs des rails de montage (1, 2) un guidage linéaire pour l'unité de support respective (4) le long de l'axe longitudinal (L) des rails de montage (1, 2), les moyens de guidage linéaire primaires (10) étant de préférence conçus comme des coulisseaux et les moyens de guidage linéaire secondaires comme des rainures de guidage correspondantes.

15. Système de distribution à fibre optique (6) comprenant un cadre de distribution (5) et au moins un dispositif de support (20) selon la revendication 13 ou 14, qui est fixé dans le cadre de distribution (5).
